# EUROPEAN PATENT APPLICATION

(11) **EP 4 657 589 A1**
(43) Date of publication of application: **03.12.2025**
(21) Application number: 24305852.6
(22) Date of filing: 29.05.2024
(51) Int. Cl.: H01M 10/0567, H01M 10/36

(54) **ELECTROLYTE ADDITIVE FOR ZN-MNO2 BATTERIES**

(71) Applicant: Centre National de la Recherche Scientifique, 75016 Paris (FR); College de France, 75231 Paris Cedex 05 (FR); SORBONNE UNIVERSITE, 75006 Paris (FR)
(72) Inventor: AGUILAR, Ivette, 75014 Paris (FR); BROWN, John, 75010 Paris (FR); TARASCON, Jean-Marie, 75014 Paris (FR)
(74) Representative: Santarelli

(57) **Abstract**

An electrolyte composition for a Zn-MnO₂ electrochemical device said electrolyte composition comprising water, a zinc salt, and a combination of additives, wherein the combination of additives comprises an organic additive and an additive of formula (I), its use and an electrochemical device comprising said electrolyte.

## Description

### Field of the invention

The invention relates to the field of Zn-MnO₂ electrochemical devices such as cell and batteries and more particularly to a combination of electrolyte additives and composition particularly suitable for such devices.

### Background

Zn-MnO₂ batteries (i.e., electrochemical cell and battery having zinc and manganese dioxide electrodes) are commonly used for home electronic devices and medical units due their energy density 80 to 190 Wh.kg⁻¹. The study of zinc cells began early in the development of electrochemical devices, as they were used as the anode in Volta's pile in 1800 and Daniel's pile in 1836. Leclanché presented the first Zn-MnO₂ cells based on a saline electrolyte, followed by the alkaline primary battery in 1950, which is still used for home electronic devices. Many studies attempting to make Zn-MnO₂ alkaline batteries rechargeable using KOH-based gel, but this remains several challenges notably due to critical issue of Zn passivation and H₂ gassing, mainly resulting from the thermodynamic instability of Zinc in basic pH. In 1986, Yamamoto et al.¹⁻³ made an important step forward in terms of rechargeable Zn-MnO₂ batteries by replacing KOH byZnSO₄-based aqueous electrolytes. By using a mildly acidic pH, the system resolved stability issues from the anode side. However, this was unsatisfactory due to a limited cycle life of around 25 cycles and low gravimetric capacity close to 100-200 mAh/g. In order to increase the cycle life of the battery, Xu⁴ proposed to decrease the mass loading and to add MnSO₄ to the electrolyte, enabling the reversibility to rise to 100 cycles. Although later studies reached more than 5000 cycles, Zn-MnO₂ coin cells were always cycled at high rates (> 5 C) with weakly loaded electrodes (< 1 mg/cm²), corresponding to a gravimetric capacity not higher than 300 mAh/g. These cells do not meet commercial requirements. Moreover, improvements have undergone several slowdowns due to uncertain chemical-electrochemical reaction mechanisms. There are controversies on the electrochemistry behind such systems since at least four explanations have been proposed. Regardless of the MnO₂-conversion mechanisms, precipitation of Zn-layered double hydroxides has been reported, caused by pH increases from the proton consumption during MnO₂-conversion reaction. Such pH changes are perceived as a critical problem for the system's sustainability due to the poor stability of zinc at extreme pH.

Lately, ICP-MS quantification confirmed that the main electrochemical reaction is driven by the dissolution/precipitation of MnO₂. A novel explanation for ZHS (Zinc Hydroxide Sulphate) precipitation / dissolution process was proposed, which likely involves a complex sol-gel chemistry of metal cations (refs. 4,5). Such reactions lead to abrupt pH changes at the cathode interface, resulting in the precipitation of ZnSO₄-electrolyte into ZHS (Zinc Hydroxide Sulphate). Contrary to what was postulated in the 90s, such a process may be far from being undesirable, since it buffers the pH through its high reversible chemical precipitation/dissolution^{7,8}. However, because of the rapid precipitation it can also induces passivation of the cathode material. This has been shown for alkaline batteries.

Thus, rechargeable Zn-MnO₂ cells still shown critical problems in terms of capacity retention, poor gravimetric capacity (not exceeding 300 mAh/g, compared to the theoretical capacity of 617 mAh/g), dendrite growth, and most importantly, capacity fading due to the low stability of the electrolyte in time caused by its vulnerability to water splitting reactions. To address these problems, researchers have chosen to limit the mass loading and increase the electrolyte volume in the cell while maintaining high C-rates. These limitations do not meet commercial demands. To date, minimising one of these issues, lead to the increase of at least one other, and usually more, issues. Hence, unlike alkaline batteries, rechargeable Zn-MnO₂ batteries have not been used in practical applications, and their development remains uncertain.

Therefore, there is a need to provide an improved aqueous electrolyte suitable for rechargeable Zn-MnO₂ cells that address the above-mentioned problems.

It has now been found most surprisingly that a combination of organic additive with a specific additive of formula (I) as described below, in an aqueous electrolyte composition of a zinc salt provides an unexpected improvement in terms of cycling stability, in particular at high and/or low temperature, without having substantial negative effects in terms of gravimetric capacity, C-rate, electrolyte volume, while significantly reducing dendrite growth.

### Description of the invention

The first object of the present invention is an electrolyte composition for a Zn-MnO₂ electrochemical device, said electrolyte composition comprising water, a zinc salt, and a combination of additives, wherein the combination of additives comprises an organic additive and an additive of formula (I): 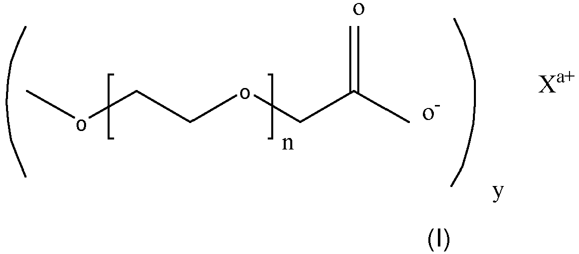 wherein:
- n is comprised between 1 and 8,
- X is H with a being equal to 1, or X is a metal with a being equal to 1 or 2,
- y is equal to **a.**

Advantageously, X is a metal selected from Zn, Mg, K, Na, Ca, Al and Li. Preferably, X is Zn or Li, more preferably X is Zn.

Advantageously, n is comprised between 1 and 3. Preferably, n is equal to 3.

Advantageously, **a** and y are equal to 2.

Advantageously, the additive of formula (I) is a zinc oligoether.

Advantageously, the additive of formula (I) is selected from zinc(2-methoxyethylcarbonate)₂ (Zn(MEC)₂), zinc(2-(2-methoxyethoxy)acetate)₂ (Zn(MEA)₂), zinc(2-[2-(2-methoxyethoxy)ethoxy]acetate)₂ (Zn(MEEA)₂), and mixtures thereof. Preferably, the additive of formula (I) is zinc(2-[2-(2-methoxyethoxy)ethoxy]acetate)₂ (Zn(MEEA)₂).This compound is also known as Zn(TOTO)₂.

Advantageously, the amount of the additive of formula (I) is comprised between 0.5 wt% and 15 wt%, preferably between 2 wt% and 12 wt%, more preferably between 2.5 wt% and 10 wt% with respect to the total weight of the electrolyte composition.

It will be noted that in the context of the present application, and unless otherwise stipulated, the ranges of values indicated are understood to be inclusive.

Advantageously, the electrolyte composition is an aqueous electrolyte composition which can be used in a Zn-MnO₂ electrochemical devices such as a cell or a battery (stack of cells) in a mildly acidic pH system.

Advantageously, the pH of the electrolyte ranges from 3 to 6.

The electrolyte composition is preferably in a liquid or semi liquid state (i.e., viscous state).

Advantageously, the concentration of water in the electrolyte composition is at least equal to 24M, preferably is comprised between 24M and 50M, more preferably between 26M and 35M.

As above-mentioned, the electrolyte composition of the invention comprises a zinc salt.

Advantageously, the zinc salt is selected from zinc sulfate (ZnSO₄), a combination of zinc sulfate with zinc trifluoromethanesulfonate(Zn(Otf)₂, and a combination of zinc sulfate with zinc acetate (Zn(OAc)₂.
Preferably, the zinc salt is zinc sulfate. The zinc sulfate considerably increases the capacity retention of the battery and helps achieve the highest gravimetric capacity.

The zinc salt is advantageously, in part or wholly in a dissolved state.

As it will be directly understood, the working temperature of the electrolyte must be considered when selecting the concentration of the additives or any other components of the electrolyte composition. Unless otherwise stated, the electrolyte working temperature ranges from -30°C to 70°C. According to a preferred embodiment, the working range of temperature is -25°C to 60°C, more preferably 5°C to 55°C, even more preferably at room temperature.

Advantageously, the concentration of zinc salt in the electrolyte composition is comprised between 0.5M and 5M, preferably between 1M and 4M, more preferably between 1M and 3M.

As above-mentioned, the electrolyte composition comprised a combination of additives, wherein the combination of additives comprises an organic additive and an additive of formula (I) as previously defined.

By "an organic additive" it means at least one organic additive. Indeed, the electrolyte composition of the invention can comprise one or more organic additives in addition to the additive of formula (I).

Advantageously, the organic additive is selected from urea, urea derivative dimethyl sulfoxide (DMSO), guanidinium sulfate, sulfuric acid (H₂SO₄), and mixtures thereof.

Advantageously, the concentration of the organic additive in the electrolyte composition is comprised between 0.1M and 15M, preferably between 1M and 12, more preferably between 2M and 10M.

The expression "urea derivative" refers to chemical compound that has been chemically modified from the original urea molecule. Examples of urea derivatives are dimethylurea, and methylurea.

According to one embodiment, the organic additive is urea or an urea derivative.

Advantageously, the concentration of urea in the electrolyte composition is comprised between 0.1M and 15M, preferably between 2M and 12M, more preferably between 8M and 10M.

According to another embodiment, the electrolyte composition comprises at least two organic additives.

Advantageously, the electrolyte composition comprises urea and sulfuric acid (H₂SO₄).

The concentration of H₂SO₄ in the electrolyte can vary depending on the experimental conditions (experimental capacity and electrolyte volume).

Advantageously, the concentration of sulfuric acid is comprised between 0.1M and 3M, preferably between 0.1M and 2M, more preferably between 0.25M and 0.5M. Advantageously, the electrolyte composition H⁺ that is at least 3 times lower than the concentration of ions OH⁻.

Indeed it is preferable that the amount of H+ ions (determined by the concentration of H₂SO₄and the volume of the electrolyte) is kept at least 3 times lower than the amount of OH- ions released by the electrochemical reaction (MnO₂ + 2 H₂O + 2e- → Mn²⁺ + 4OH⁻), with the number of electrons being related to the experimental capacity. This ratio helps to prevent anode corrosion.

According to another embodiment, the organic additive is DMSO.

Advantageously, the concentration of DMSO in the electrolyte composition is comprised between 0.1M and 15M, preferably between 2 and 10M, more preferably between 3 and 6M.

According to another embodiment, the organic additive is guanidinium sulfate.

Advantageously, the concentration of guanidinium sulfate in the electrolyte composition is comprised between 0.1M and 5M, preferably between 0.5 and 4M, more preferably between 1 and 3M.

According to another embodiment of the invention the electrolyte composition further comprises manganese sulfate (MnSO₄).

Advantageously, the concentration of manganese sulfate in the electrolyte composition is comprised between 0.1M and 5M, preferably between 0.5 and 3M, more preferably between 0.2M to 2M
As the skilled person will understand, the concentration of the various components of the electrolyte composition according to the invention, when in a liquid or viscous state, will be advantageously selected in order to avoid precipitation of any components, in particular salt such as sulfate salts, it may contain.

According to another preferred embodiment of the invention the electrolyte composition does not comprise chloride ions as these ions can have some deleterious effect on the performances of the composition.

A further object of the invention relates to a process for preparing the electrolyte composition as above-defined, said process comprising the following steps:
a) Optionally providing a solution comprising sulfuric acid and water,
b) Providing a zinc solution by mixing a zinc salt with water,
c) Optionally, mixing the solution obtained in step a) with zinc salt
d) Adding at least one organic additive to the solution obtained in step b), or in step c)
e) Adding the additive of formula (I) to the solution obtained in step d).

The zinc salt, the organic additive and the additive of formula (I) are as above-mentioned including the preferred embodiments.

The electrolyte composition of the present invention is particularly suited to be used in an electrochemical device such as a Zn-MnO₂ cell and/or battery.

Thus, a further object of the invention is an electrochemical device comprising the electrolyte composition as previously defined.

Advantageously, the electrochemical device is a battery.

A battery is composed of one or more electrochemical cells. In particular, the electrolyte composition of the invention is adapted to be used for the manufacture of rechargeable battery, storage battery, or secondary cell of this type which can be charged, discharged into a load, and recharged many times. The electrolyte composition according to the invention can be used in small volume (e.g., no less than 16µl per mg of MnO₂ and no more than 160 µl) and therefore the size of the battery according to the invention is adjusted.

A further object of the invention is an electrochemical cell comprising an anode, a cathode, and an electrolyte, wherein said anode comprises an anode active material comprising zinc metal, wherein said cathode comprises a cathode active material comprising manganese dioxide (MnO₂) and wherein said electrolyte is as previously defined.

Advantageously, the cathode is at least partially or essentially constituted of, a powder. This powder preferably comprises a mixture of particles of MnO₂ and of a conductive additive such as carbon black. The average particle size of this powder, measured by FEG-SEM image, is preferably below 5 µm, more preferably ranging from 0.5 µm and 2µm, e.g., 1.33 µm.

Advantageously, the powder is preferably not substantially compressed or in a film like configuration. It is thus preferred that no PTFE or PVDF be used as binder or even that no hydrophobic binder be used.

Advantageously, MnO₂ and the conductive additive are present in a mass ratio of 45 to 65, preferably 50/50.

Advantageously, the cathode has a mass loading comprised between 5 mg/cm² and 15 mg/cm², preferably 6 mg/cm² and 12 mg/cm² more preferably 10 mg/cm².

A separator is generally inserted between an anode and cathode to prevent any short circuiting. The separator material can be selected from among the following materials: glass fiber, cellulose fiber, a polyolefin e.g. polypropylene PP, polyethylene PE, polyester and a combination thereof.

The separator is advantageously made of glass fibre and preferably glass microfibers. Glass microfibers refer to fibers of glass having a porosity of less than 10 µm.

For example, a Whatman glass microfibre separator of grade D (pore size 2.7 µm), or grade F(pore size 0.4 µm), or of grade A (pore size 1.6µm) or of grade C (pore size 1.2 µm) can be used.

Advantageously, glass fibre separator can be combined to a second separator.

Preferably, said second separator can be made with polyolefin e.g. polypropylene PP, polyethylene PE, polyester. For example separator sold by Celgrad or Bellcore (made with PVDF-HFP copolymer resin, a plasticizer (dibutyl phthalate), and nano filler (SiO2).

The current collector can be made of any suitable material. It is preferred to avoid the use of aluminium or copper. Advantageously, the current collector is made with titanium, stainless steel or glassy carbon.

A further object of the invention is the use of the electrolyte and/or of the electrochemical cell of the invention for the manufacture of an electrochemical device.

Advantageously, the electrochemical device is a rechargeable battery, notably a Zn-MnO₂ battery.

A rechargeable battery, also known as a secondary battery, is an electrochemical device capable of being charged and discharged multiple times.

It is a further object of the invention to use the compound of formula (I) 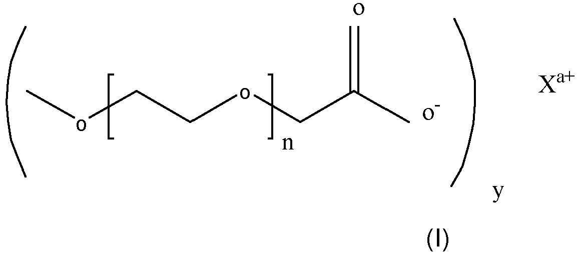 wherein:
- n is comprised between 1 to 8,
- X is H with a being equal to 1, or X is a metal with a being equal to 1 or 2,
- y is equal to a,
as an additive in an electrolyte composition for reducing dendrite growth in a Zn-MnO₂ electrochemical device, said electrolyte composition comprising water, a zinc salt and an organic additive.

The inventors have demonstrated that the electrolyte composition according to the invention leads to the following advantages:
- Decrease significantly dendrite growth on the anode (zinc electrode), and therefore avoiding short-circuit in the battery. Indeed, the electrolyte composition of the invention has the ability to alter the solvation structure of Zn²⁺ complexes, thus reducing the uneven electrodeposition of zinc.
- Reduce Zn corrosion in mild acidic conditions.
- Shift the freezing point of water resulting to a significant improvement in cycling performance at high (55°C and low (-30°C) temperatures.

Other features and advantages of the invention will become apparent from the following examples, given by way of illustration, with reference to the following figures.

The compound ZnTOTO refers to zinc(2-[2-(2-methoxyethoxy)ethoxy]acetate)₂.

### Brief description of the figures

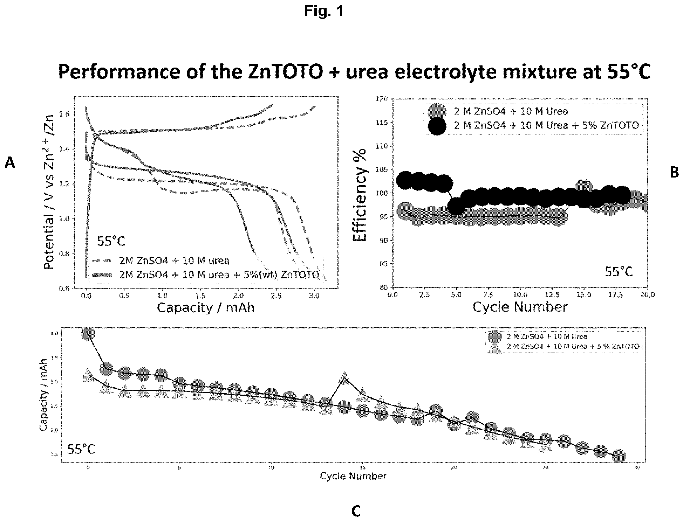

**Figure 1** shows galvanostatic profiles as a function of capacity (Figure 1 A) and its corresponding cycling performances of Zn/MnO₂ cells at 55°C (efficiency Figure 1B), capacity Figure 1 C), with a 12.5 mg cathode mixture composed of 50wt% MnO₂ and 50wt% carbon black (Ketjenblack), in an electrolyte composition according to the invention as described in example 1 (2M ZnSO₄ + 10M urea + 5wt% ZnTOTO), and in comparative electrolyte composition (2M ZnSO₄ + 10M urea). The voltage window was set between 0.6 V and 1.65 V. The current density used was ±98 mA/g_{(MnO2)}.

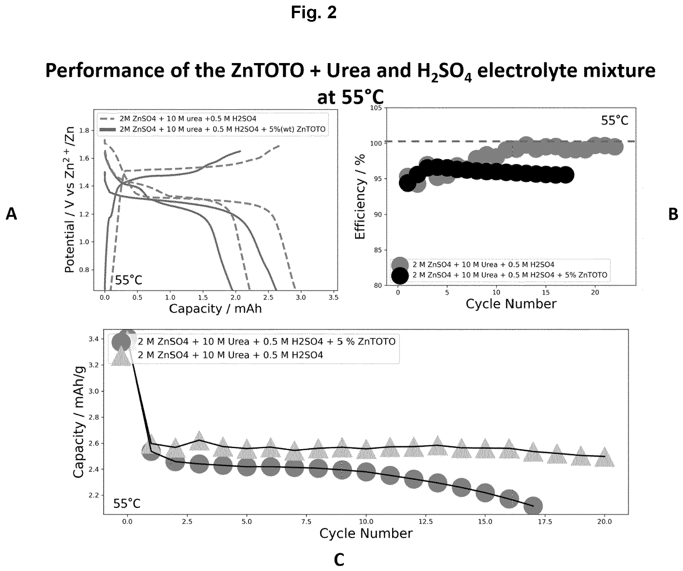

**Figure 2** shows galvanostatic profiles as a function of capacity and its corresponding cycling performances of Zn/MnO₂ cells at 55°C, with a 12.5 mg cathode mixture composed of 50wt% MnO₂ and 50wt% carbon black (Ketjenblack), in an electrolyte composition according to the invention as described in example 2( 2M ZnSO₄ + 10M urea + 0.5 M H₂SO₄ + 5wt% ZnTOTO), and in comparative electrolyte composition (2M ZnSO₄ + 10M urea). The voltage window was set between 0.75 V and 1.65 V. The current density used was ±98 mA/g_{(MnO2)} .

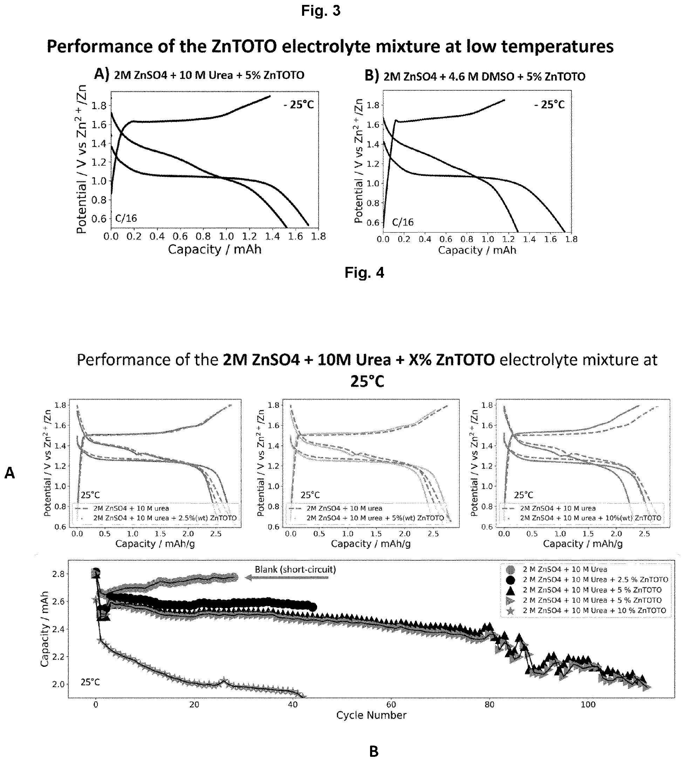

**Figure 3** shows the galvanostatic profiles as a function of capacity, at low temperature, for Zn/MnO₂ cells, with a 12.5 mg cathode mixture composed of 50wt% MnO₂ and 50wt% carbon black (Ketjenblack), in two electrolyte compositions according to the invention:
   - A) as described in example 1 ( 2M ZnSO₄ + 10M urea + 5wt% ZnTOTO),
   - B) 2M ZnSO₄ + 4.6M DMSO + 5wt% ZnTOTO
   The voltage window was set between 0.55 V and 1.85 V. The current density used was ±24 mA/g_{(MnO2)} at -25°C.
**Figure 4** shows galvanostatic profiles as a function of capacity and its corresponding cycling performances of Zn/MnO₂ cells at room temperature, with a 12.5 mg cathode mixture composed of 50wt% MnO₂ and 50wt% carbon black (Ketjenblack), in an electrolyte composition according to the invention with different concentration of additive compound of formula (I)
   A) 2M ZnSO₄ + 10M urea + 2.5wt% ZnTOTO
   B) 2M ZnSO₄ + 10M urea + 5wt% ZnTOTO
   C) 2M ZnSO₄ + 10M urea + 10wt% ZnTOTO
   The voltage window was set between 0.65 V and 1.8 V. The current density used was ±98 mA/g_{(MnO2)} at 25°C.

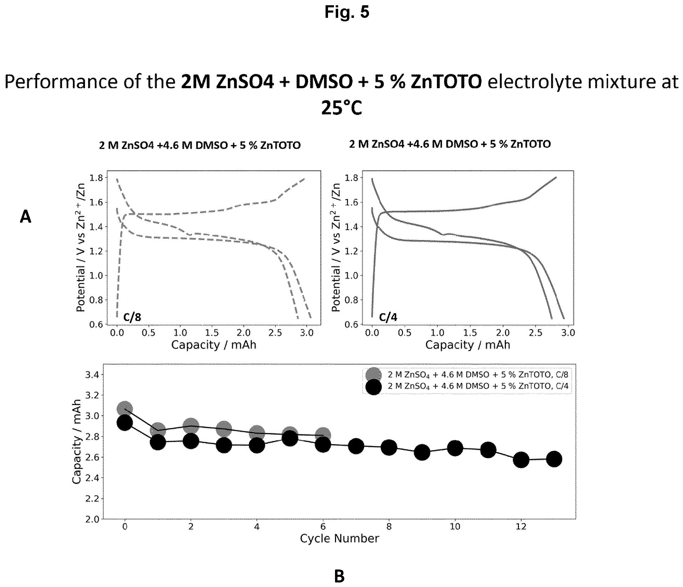

**Figure 5** shows galvanostatic profiles as a function of capacity and its corresponding cycling performances of Zn/MnO₂ cells with a 12.5 mg cathode mixture composed of 50wt% MnO₂ and 50wt% carbon black (Ketjenblack), in an electrolyte composition according to the invention 2M ZnSO₄ + 4.6 M DMSO + 5wt % ZnTOTO electrolyte mixture. The voltage window was set between 0.65 V and 1.8 V. The current density used was ±98 mA/g_{(MnO2)} at 25°C.

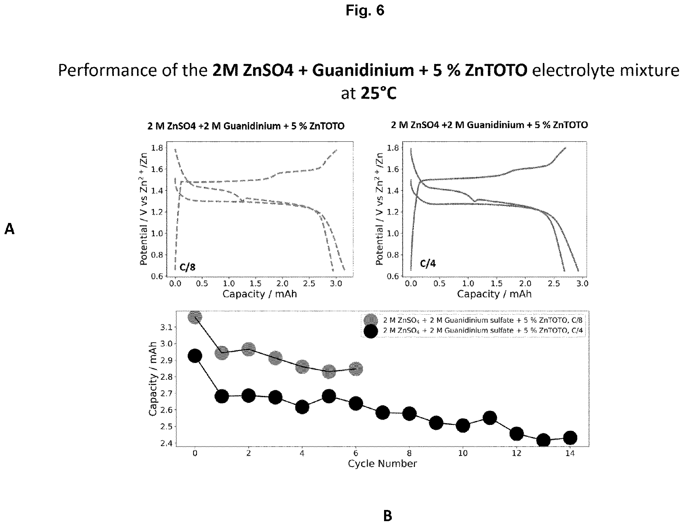

**Figure 6** shows galvanostatic profiles as a function of capacity and its corresponding cycling performances of Zn/MnO₂ cells with a 12.5 mg cathode mixture composed of 50wt% MnO₂ and 50wt% carbon black (Ketjenblack), in an electrolyte composition according to the invention (2M ZnSO₄ + 2 M Guanidinium sulfate + 5 wt% ZnTOTO). The voltage window was set between 0.65 V and 1.8 V. The current density used was ±98 mA/g_{(MnO2)} at 25°C.

### Example 1: Preparation of a first electrolyte according to the invention

An electrolyte composition comprising ZnSO₄ salt, an organic additive (urea, DMSO or Guanidinium sulfate) and an additive of formula (I) named ZnTOTO has been prepared as described below:
Step 1: ZnSO₄ salt was mixed with Milli-Q ultrapure water in a volumetric flask, either by hand or using a vortex mixer, until complete dissolution.
Step 2: The organic additive (urea, DMSO or Guanidinium sulfate) was added to the ZnSO₄ solution in another volumetric flask and vigorously stirred until fully dissolved.
Step 3: the additive of formula (I) (ZnTOTO) was added to the solution.

The order of steps 1 and 2 can be interchanged, however it is preferred that step 3 be performed last.

A comparative electrolyte composition has also been prepared without the additive of formula (I) and following steps 1 and 2 as above-mentioned.

The following final concentrations in water was used:
- 2M ZnSO₄ +10M urea + 5wt% ZnTOTO
- 2M ZnSO₄ +10M urea + 2.5wt% ZnTOTO
- 2M ZnSO₄ +10M urea + 10wt% ZnTOTO
- 2M ZnSO₄ +4.6 M DMSO + 5wt% ZnTOTO
- 2M ZnSO₄ +2M guanidinium sulfate + 5wt% ZnTOTO
- 2M ZnSO₄ +10M urea (comparative example)

The different electrolyte compositions have been tested in Zn-MnO₂ cells. The galvanostatic profiles as a function of capacity of these cells and their corresponding cycling performances are presented in Figures 1, 3 to 6.

### Example 2: Preparation of second electrolyte composition according to the invention.

An electrolyte composition comprising ZnSO₄ salt, two organic additives (urea and sulfuric acid H₂SO₄) in combination with the additive of formula (I) (ZnTOTO) has been prepared as described below:
Step 1: a solution of H₂SO₄ was prepared in MilliQ water.
Step 2: ZnSO₄ salt was mixed with H₂SO₄ solution obtained in step 1 in a volumetric flask until fully dissolved, by hand or using a vortex mixer.
Step 3: urea was added to the solution obtained in the previous step in another volumetric flask and vigorously stirred until completely dissolved.
Step 4: the additive of formula (I) was then added to the solution obtained in the previous step.

The order of steps 1 and 2 can be interchanged, however it is preferred that steps 3 and 4 be performed successively and at the end of process.

The following final concentrations in water was used:
- 2M ZnSO₄ +10M urea+0.5M H₂SO₄+ 5wt% ZnTOTO

This electrolyte composition has been tested in Zn-MnO₂ cells. The galvanostatic profiles as a function of capacity of this cell and its corresponding cycling performances is presented in Figure 2 at 55°C and in Figure 4 at room temperature.

### Comments

Figure 1A shows that in the comparative Zn-MnO₂ cell havingan electrolyte composition of 2M ZnSO4 + 10M urea, the lifespan is close to 25 cycles. whereas, the addition of ZnTOTO as an electrolyte additive increases the lifespan to 30 cycles.

In addition, the most straightforward evidence of improvement comes from the increase in cell efficiency, which remains close to 100%, indicating a decrease in side reactions due to the additive (see Figure 1B). Figure 2 shows similar behavior with the composition of ZnSO4 + urea + H2SO4 upon the addition of ZnTOTO.

Figure 3 A and B show the cycling properties at -25°C of electrolyte compositions according to the invention comprising respectively 2M ZnSO4 + 10 M urea + ZnTOTO and ZnSO4 + guanidinium + ZnTOTO. It is important to highlight that without the addition of ZnTOTO, the electrolyte freezes at this temperature.

Figure 4 compares the cycling performances of comparative Zn-MnO₂ cells with electrolyte compositions according to the invention comprising 2M ZnSO₄ + 10M urea and 2M ZnSO₄ + 10M urea + 2.5wt% or 5wt% or 10wt% of ZnTOTO. We observe that the number of cycle before the formation of dendrite is increased with the electrolyte composition of the invention. In particular, we observe an increase in battery lifespan from 30 to 200 cycles with the addition of 5% ZnTOTO.

The compatibility and stability of Zn salt + guanidinium or DMSO with the additive of formula (I) in a Zn-MnO₂ cell are shown in Figures 5 and 6.

Therefore, it follows from these results that the electrolyte composition according to the invention allows a significant improvement in terms of reduction of dendrite growth, stability, cycling performance at high and low temperature of Zn-MnO₂ cells comprising said electrolyte.

### Reference list:

1. Yamamoto, T. & Shoji, T. Rechargeable ZnIZnSO, IMnO+pe Cells. Inorganica Chim Acta 117, 27-28 (1986).
2. Shoji, T. & Yamamoto, T. Charging and discharging behavior of zinc-manganese dioxide galvanic cells using zinc sulfate as electrolyte. Journal of Electroanalytical Chemistry 362, 153-157 (1993).
3. Shoji, T., Hishinuma, M. & Yamamoto, T. Zinc-manganese dioxide galvanic cell using zinc sulphate as electrolyte. Rechargeability of the cell. J Appl Electrochem 18, 521-526 (1988).
4. Xu, C., Li, B., Du, H. & Kang, F. Energetic Zinc Ion Chemistry: The Rechargeable Zinc Ion Battery. Angewandte Chemie 124, 957-959 (2012).
5. Godeffroy, L. et al. Decoupling the Dynamics of Zinc Hydroxide Sulfate Precipitation/Dissolution in Aqueous Zn-MnO2 Batteries by Operando Optical Microscopy: A Missing Piece of the Mechanistic Puzzle. Adv Energy Mater 12, (2022).
6. Aguilar, I. et al. Identifying interfacial mechanisms limitations within aqueous Zn-MnO2 batteries and means to cure them with additives. Energy Storage Mater 53, 238-253 (2022).
7. Fitz, O. et al. Electrolyte Study with in Operando pH Tracking Providing Insight into the Reaction Mechanism of Aqueous Acidic Zn//MnO2 Batteries. ChemElectroChem 8, 3553-3566 (2021).
8. Bischoff, C. F. et al. Revealing the Local pH Value Changes of Acidic Aqueous Zinc Ion Batteries with a Manganese Dioxide Electrode during Cycling. J Electrochem Soc 167, 020545 (2020).

## Claims

1. An electrolyte composition for a Zn-MnO₂ electrochemical device, said electrolyte composition comprising water, a zinc salt, and a combination of additives, wherein the combination of additives comprises an organic additive and an additive of formula (I): 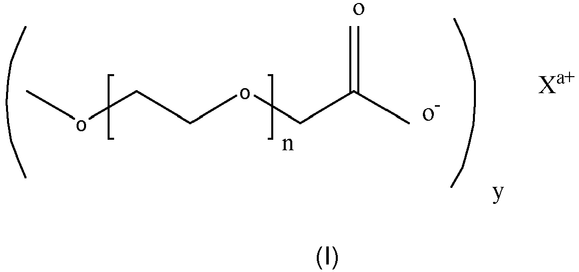 wherein:
- n is comprised between 1 to 8,
- X is H with a being equal to 1, or X is a metal with a being equal to 1 or 2,
- y is equal to a.

2. The electrolyte composition according to claim 1 wherein X is a metal selected from Zn, Mg, K, Na, Ca, Al and Li.

3. The electrolyte composition according to claim 2, wherein X is Zn.

4. The electrolyte composition according to any one of claims 1 to 3, wherein n is comprised between 1 to 3.

5. The electrolyte composition according to any one of claims 1 to 4, wherein a and y are equal to 2.

6. The electrolyte composition according to any one of claims 1 to 5, wherein the additive of formula (I) is selected from:
- zinc(2-methoxyethylcarbonate)₂ (Zn(MEC)₂),
- zinc(2-(2-methoxyethoxy)acetate)₂ (Zn(MEA)₂),
- zinc(2-[2-(2-methoxyethoxy)ethoxy]acetate)₂ (Zn(MEEA)₂), and
- mixtures thereof.

7. The electrolyte composition according to any one of claims 1 to 6, wherein the amount of the additive of formula (I) is comprised between 0.5 wt% and 15 wt%, with respect to the total weight of the electrolyte composition.

8. The electrolyte composition according to any one of claims 1 to 7, wherein the concentration of water in the electrolyte composition is at least equal to 24M.

9. The electrolyte composition according to any one of claims 1 to 8, wherein the zinc salt is selected from zinc sulfate (ZnSO₄), a combination of zinc sulfate with zinc trifluoromethanesulfonate(Zn(Otf)₂), and a combination of zinc sulfate with zinc acetate (Zn(OAc)₂).

10. The electrolyte composition according to any one of claims 1 to 9, wherein the zinc salt is zinc sulfate.

11. The electrolyte composition according to any one of claims 1 to 10, wherein the concentration of the zinc salt in the electrolyte composition is comprised between 0.5M and 5M.

12. The electrolyte composition according to any one of claims 1 to 11, wherein the organic additive is selected from urea, urea derivative, dimethyl sulfoxide (DMSO), guanidinium sulfate, sulfuric acid (H₂SO₄), and mixtures thereof.

13. The electrolyte composition according to any one of claims 1 to 12, wherein the concentration of the organic additive in the electrolyte composition is comprised between 0.1M and 15M.

14. The electrolyte composition according to any one of claims 1 to 13, further comprising manganese sulfate (MnSO₄).

15. An electrochemical cell comprising an anode, a cathode, and an electrolyte, wherein said anode comprises a anode active material comprising zinc metal, wherein said cathode comprises a cathode active material comprising manganese dioxide (MnO₂) and wherein said electrolyte is as defined in any one of claims 1 to 14.

16. The electrochemical cell according to claim 15, wherein the cathode comprises, or is essentially constituted of, a powder which comprises a mixture of particles of MnO₂ and a conductive additive such as carbon black.

17. The electrochemical cell according to any one of claims 15 or 16, wherein MnO₂ and the conductive additive are present in a mass ratio of 45 to 65, preferably 50/50.

18. The use of the electrolyte composition as defined in any one of claims 1 to 14 or of the electrochemical cell as defined in any one of claims 15 to 17, for the manufacture of an electrochemical device.

19. The use according to claim 18, wherein the electrochemical device is a rechargeable battery, notably a Zn-MnO₂ battery.

20. Use of the compound of formula (I) 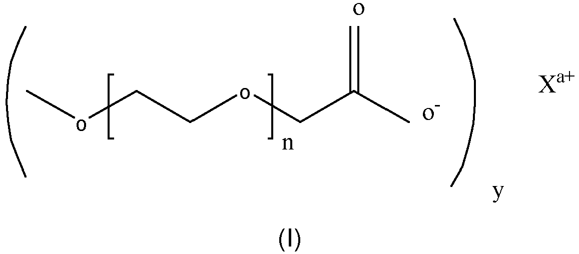 wherein:
- n is comprised between 1 to 8,
- X is H with a being equal to 1, or X is a metal with a being equal to 1 or 2,
- y is equal to a,
as an additive in an electrolyte composition for reducing dendrite growth in a Zn-MnO₂ electrochemical device, said electrolyte composition comprising water, a zinc salt and an organic additive.
